# FASCICULE DE BREVET EUROPEEN

(11) **EP 4 123 665 B1**
(45) Date de publication et mention de la délivrance du brevet: **06.12.2023**
(21) Numéro de dépôt: 22185829.3
(22) Date de dépôt: 19.07.2022
(51) Int. Cl.: G21C 17/112, G21C 17/032

(54) **SYSTÈME DE DÉTERMINATION D'UNE PUISSANCE GÉNÉRÉE PAR UN ASSEMBLAGE POUR RÉACTEUR NUCLÉAIRE ET PROCÉDÉ DE DÉTERMINATION DE LA PUISSANCE**
SYSTEM ZUR BESTIMMUNG EINER VON EINER BAUGRUPPE FÜR EINEN KERNREAKTOR ERZEUGTEN LEISTUNG UND VERFAHREN ZUR BESTIMMUNG DER LEISTUNG
SYSTEM FOR DETERMINING POWER GENERATED BY AN ASSEMBLY FOR A NUCLEAR REACTOR AND METHOD FOR DETERMINING THE POWER

(30) Priorité: 22.07.2021 FR 2107899
(43) Date de publication de la demande: 25.01.2023
(73) Titulaire: Commissariat à l'énergie atomique et aux énergies alternatives, 75015 Paris (FR)
(72) Inventeur: LATIL, Philippe, 84120 Pertuis (FR)
(74) Mandataire: Hautier IP

(56) Documents cités:
- FR-A1- 2 988 837
- US-A- 4 885 943

## Description

### DOMAINE TECHNIQUE

La présente invention concerne le domaine des assemblages pour réacteur nucléaire comprenant un système de détermination d'une puissance générée par un assemblage. Elle trouve pour application particulièrement avantageuse le domaine de la détermination d'une puissance générée par un assemblage d'un réacteur à eau légère.

### ETAT DE LA TECHNIQUE

Dans un réacteur nucléaire électrogène, le coeur du réacteur reçoit le combustible contenant des matières fissiles énergétique. Le combustible nucléaire émet de la chaleur par réaction de fission. La chaleur émise est évacuée par un fluide caloporteur du coeur vers l'îlot conventionnel de la centrale nucléaire, pour la transformer en électricité.

Le coeur du réacteur est classiquement divisé en assemblages combustibles, chargés les uns à côté des autres dans la cuve du réacteur. Un assemblage est typiquement constitué d'un faisceau de crayons combustibles. Différents assemblages peuvent en outre être configurés pour des actions spécifiques, à des fins de contrôle ou de sécurité par exemple. Lors du fonctionnement du réacteur, ces assemblages sont traversés par le fluide caloporteur, par exemple de bas en haut. Le fluide caloporteur s'échauffe à leur contact et emporte l'énergie thermique générée par fission.

Le fonctionnement d'un réacteur nucléaire est régulé afin de contrôler la puissance électrique générée. Pour cela, on cherche à déterminer la puissance thermique globalement fournie par le réacteur, voire plus localement pour chaque assemblage. Cette détermination est difficile, car elle nécessite de mesurer plusieurs variables physiques dans un environnement à conditions sévères, notamment en termes de pression, de température, et de rayonnement.

Il existe des méthodes de calculs pour effectuer des simulations de la puissance thermique globalement fournie par le réacteur. Ces méthodes sont toutefois complexes à mettre en oeuvre et leur erreur de précision reste supérieure à 5 % de la puissance réellement fournie.

En alternative, on peut déterminer la pression du fluide caloporteur dans le coeur du réacteur et utiliser l'équation de la chaleur pour obtenir la puissance thermique. Pour cela, plusieurs paramètres sont nécessaires, tels que la température du fluide caloporteur en entrée et en sortie du coeur du réacteur, et le débit du fluide caloporteur. Pour déterminer le débit du fluide caloporteur, une première solution est de mesurer la différence de pression entre les conduits d'alimentation en fluide caloporteur entrants et sortants de la cuve du réacteur, communément appelés branches chaudes et branches froides. Toutefois, cette solution ne donne qu'une information globale à l'échelle du coeur du réacteur. En outre, cette solution présente une incertitude élevée. L'incertitude de précision de la puissance réelle reste là encore supérieure à 5 % de la valeur réelle.

Il est par ailleurs connu du document FR2413757 A1, un dispositif de mesure du débit du fluide caloporteur en entrée du coeur d'un réacteur nucléaire. Le dispositif comprend un rotor comprenant un élément magnétique. La vitesse de rotation de la turbine est mesurée par une lecture électromagnétique, pour en déduire le débit du fluide caloporteur. En pratique, il s'avère que cette solution présente une fiabilité et une précision limitée. FR2988837 divulgue un système de détermination de la puissance résiduelle générée par un assemblage d'un réacteur nucléaire. Ce système est destiné à être immergé dans du sodium qui est un fluide caloporteur d'un réacteur nucléaire et comprend un débitmètre pour mesurer le débit du fluide caloporteur; un corps comprenant une entrée, une sortie et un passage pour l'écoulement du fluide caloporteur depuis l'entrée jusqu'à la sortie. Ce passage s'étend depuis l'entrée jusqu'à la sortie, des dispositifs de mesure d'une température du fluide caloporteur en entrée de l'assemblage et d'une température du fluide caloporteur en sortie de l'assemblage. US4885943 divulgue (cf fig. 12 et sa description) un débitmètre optique qui peut être utilisé à haute température, à haute pression et dans des conditions chimiques agressives. Ce débitmètre comprend un rotor configuré pour être entraîné, par l'écoulement d'un fluide, en rotation autour d'un axe parallèle à la direction d'écoulement du fluide dans un passage où le débitmètre est disposé. La vitesse de rotation du rotor est mesuré à l'aide d'un module d'émission d'un rayonnement lumineux, d'un module optique configuré pour transmettre le rayonnement lumineux sur des pales du rotor et d'un système qui reçoit le rayonnement lumineux réfléchi.

Un objet de la présente invention est donc de proposer une solution permettant de déterminer la puissance générée par un assemblage d'un réacteur nucléaire, voire d'un assemblage d'un réacteur nucléaire, avec une plus grande précision que dans les solutions existantes.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit système de détermination d'une puissance générée par un assemblage pour réacteur nucléaire, destiné à être immergé dans un fluide caloporteur, comprenant :
- un sous- système de mesure du débit du fluide caloporteur, comprenant
   ∘un corps comprenant au moins une entrée, au moins une sortie et au moins un passage pour l'écoulement du fluide caloporteur depuis l'entrée jusqu'à la sortie,
   ∘au moins un rotor disposé à l'intérieur du passage, le rotor comprenant une pluralité de pales et étant configuré pour être entraîné, par l'écoulement du fluide caloporteur, en rotation autour d'un axe sensiblement parallèle à la direction d'écoulement du fluide caloporteur dans le passage,
   oun dispositif de mesure d'une vitesse de rotation du rotor.

Avantageusement, le dispositif de mesure comprend :
- un module d'émission d'un rayonnement lumineux incident présentant une longueur d'onde supérieure à 1200 nm (10⁻⁹ m),
- un module optique configuré pour
   ∘ transmettre le rayonnement lumineux incident depuis le module d'émission sur les pales du rotor, de sorte que le rayonnement lumineux incident est incident sur les pales du rotor selon une direction sensiblement perpendiculaire à l'axe de rotation du rotor, et
   ∘ recevoir un rayonnement lumineux réfléchi, le rayonnement lumineux réfléchi étant issu de la réflexion, sur les pales du rotor, du rayonnement lumineux incident,
- un premier module de conversion configuré pour
   ∘ déterminer la vitesse de rotation du rotor en fonction du rayonnement réfléchi et
   ∘ déterminer le débit du fluide caloporteur en fonction de la vitesse de rotation du rotor.

Le système comprend en outre :
- un sous-système de mesure d'une température du fluide caloporteur en entrée de l'assemblage et d'une température du fluide caloporteur en sortie de l'assemblage, et
- un deuxième module de conversion configuré pour déterminer une puissance générée par l'assemblage en fonction au moins du débit du fluide caloporteur et d'une différence entre la température du fluide caloporteur en entrée de l'assemblage et la température du fluide caloporteur en sortie de l'assemblage.

Le sous-système de mesure du débit du fluide caloporteur permet une mesure optique de la vitesse de rotation du rotor. Ainsi, la sensibilité à l'environnement électromagnétique autour du sous-système de mesure est limitée, voire évitée. La mesure du débit du fluide caloporteur s'écoulant autour ou le long de l'assemblage est donc rendue plus fiable et plus précise.

Par ailleurs, dans le cadre du développement de la présente invention, il a été remarqué que la solution décrite dans le document FR2413757 A1, basée sur une mesure de la vitesse de rotation d'un rotor par une lecture électromagnétique, présente une faible précision du fait de sa sensibilité à l'environnement électromagnétique de proximité. La solution proposée ne présente pas de sensibilité à l'environnement électromagnétique.

En outre, une détection basée sur un effet magnétique impose des contraintes sur les matériaux constitutifs du dispositif. Au contraire, la solution de la présente invention, basée sur une mesure optique, permet de réduire les contraintes sur les matériaux constitutifs de l'assemblage.

Le sous-système de mesure du débit permet une mesure du débit du fluide caloporteur localement au niveau de l'assemblage. La précision de la mesure est ainsi renforcée, notamment par rapport aux solutions de mesure de la différence de pression entre les branches chaudes et branches froides du réacteur. La détermination de la puissance générée par l'assemblage est ainsi rendue plus précise. En outre, le système de mesure permet avantageusement une détermination simplifiée, en ligne et en temps réel, de cette puissance par rapport notamment aux simulations de la puissance thermique qui demandent un temps de calcul long.

Le rayonnement incident est en outre appliqué de manière radiale sur le rotor, par le module optique. Dans la direction d'écoulement du fluide caloporteur, l'encombrement du module optique est donc réduit par rapport aux solutions existantes. Lorsque le fluide caloporteur s'écoule dans le sous-système de mesure du débit au niveau du rotor, des turbulences des lignes de courant sont induites. Le module optique n'étant pas disposé dans la direction d'écoulement du fluide mais perpendiculairement à celle-ci, l'impact de ces turbulences sur le module optique sont minimisées. La précision de la mesure du débit est donc augmentée par rapport aux solutions existantes.

En outre, le module optique n'étant pas disposé le long de l'écoulement du fluide caloporteur, cet écoulement n'est pas perturbé par la mesure du débit. Notamment, cette disposition minimise des pertes de charges dans l'écoulement du fluide. L'impact de la mesure sur l'écoulement du fluide est ainsi minimisé, par rapport aux solutions existantes.

Le sous-système de mesure du débit permet par conséquent une mesure précise et fiable du débit du fluide caloporteur, et notamment avec une précision dans une gamme de ± 1% par rapport à la valeur réelle.

Grâce à la mesure de la température du fluide caloporteur en entrée de l'assemblage et de la température du fluide caloporteur en sortie de l'assemblage, le système permet par conséquent une mesure précise et fiable de la puissance générée par un assemblage, et notamment avec une précision dans une gamme de ± 1% par rapport à la valeur réelle.

Une autre solution aurait pu consister à prévoir d'appliquer le rayonnement lumineux incident de manière radiale sur une pièce dédiée, portant des marques permettant cette lecture. Par rapport à cette solution, le système proposé par la présente invention :
- réduit la perturbation de l'écoulement en minimisant l'encombrement du sous-système de mesure du débit dans la direction d'écoulement du fluide caloporteur,
- présente une mesure plus précise et fiable du débit,
- présente un nombre de pièces réduit. Le système de détermination de la puissance est donc rendu plus simple et plus fiable.

Un deuxième aspect concerne un réacteur nucléaire comprenant :
- une cuve dans laquelle circule un fluide caloporteur, et
- un ensemble d'assemblages disposés dans la cuve, au moins un assemblage de l'ensemble comprenant un système de détermination d'une puissance générée par un assemblage selon le premier aspect de l'invention.

Selon un exemple, la cuve est distincte du corps du sous-système de mesure du débit.

Selon un exemple, au moins certains des assemblages comprennent chacun le système de détermination d'une puissance générée par un assemblage selon le premier aspect.

Selon un exemple, le réacteur est un réacteur à eau légère.

Selon un exemple, le fluide caloporteur circulant dans la cuve est à une pression inférieure à 200 bar, à une température inférieure à 350 °C et s'écoule à un débit compris entre 0,05 et 25000 m³/h.

Le réacteur nucléaire peut comprendre une cuve dans laquelle circule un fluide caloporteur et au moins un système de détermination d'une puissance générée par un assemblage et immergé dans le fluide caloporteur. Le système de détermination d'une puissance peut présenter toute caractéristique du système de détermination d'une puissance selon le premier aspect de l'invention.

Un troisième aspect concerne un procédé de détermination d'une puissance générée par un assemblage pour réacteur nucléaire par un système de détermination d'une puissance générée selon le premier aspect de l'invention et/ou d'un réacteur nucléaire selon le deuxième aspect de l'invention, comprenant au moins :
- une mesure d'un débit du fluide caloporteur comprenant au moins :
   oune émission par le module d'émission, d'un rayonnement lumineux incident présentant une longueur d'onde supérieure à 1200 nm, puis
   oune transmission, par le module optique, du rayonnement lumineux incident depuis le module d'émission sur des pales du rotor, de sorte que le rayonnement lumineux incident est incident sur les pales du rotor selon une direction sensiblement perpendiculaire à l'axe de rotation du rotor, puis
   oune réflexion du rayonnement lumineux incident sur les pales du rotor, puis
   oune réception, par le module optique, du rayonnement lumineux réfléchi, puis
   oune conversion, par le module de conversion, du rayonnement lumineux réfléchi de façon à déterminer la vitesse de rotation du rotor, puis à déterminer le débit du fluide caloporteur en fonction de la vitesse de rotation du rotor, et
- une mesure d'une température du fluide caloporteur en entrée de l'assemblage et d'une température du fluide caloporteur en sortie de l'assemblage, et
- une conversion en puissance générée par le réacteur nucléaire à partir au moins du débit du fluide caloporteur, et d'une différence entre la température du fluide
caloporteur en entrée de l'assemblage et la température du fluide caloporteur en sortie de l'assemblage.

Selon un exemple, le procédé peut en outre comprendre une mesure de la pression du fluide caloporteur.

Selon un exemple, la mesure d'une parmi la température du fluide caloporteur en entrée de l'assemblage et la température du fluide caloporteur en sortie de l'assemblage est obtenue à partir du rayonnement lumineux réfléchi.

Selon un exemple, le réacteur nucléaire comprenant une cuve dans laquelle circule le fluide caloporteur, le fluide caloporteur circulant dans la cuve est à une pression inférieure à 200 bar, à une température inférieure à 350°C et s'écoule à un débit compris entre 0,05 et 25000 m³/h.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue en coupe longitudinale d'une cuve d'un réacteur nucléaire selon un exemple de réalisation de l'invention.
La figure 2 représente une vue d'ensemble du sous-système de mesure du débit selon un exemple de réalisation de l'invention.
La figure 3 représente un schéma fonctionnel du sous-système de mesure du débit selon un exemple de réalisation de l'invention.
Les figures 4A et 4B illustrent de manière simplifiée les étapes d'un procédé de mesure du débit du fluide caloporteur selon différents exemples de réalisation de l'invention.
Les figures 5A et 5B représentent une vue en coupe longitudinale du module actionneur du sous-système de mesure du débit selon plusieurs exemples de réalisation.
La figure 6 représente une vue en coupe transversale du module actionneur du sous-système de mesure du débit illustré dans les figures 5A et 5B.
La figure 7 représente le principe de fonctionnement d'une fibre optique comprenant un réseau de Bragg.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions relatives du système et du réacteur nucléaire ne sont pas nécessairement représentatives de la réalité.

### DESCRIPTION DÉTAILLÉE

Avant d'entamer une revue détaillée de modes de réalisation de l'invention, sont énoncées ci-après des caractéristiques optionnelles du système de détermination de la puissance générée qui peuvent éventuellement être utilisées en association ou alternativement :
- selon un exemple le corps est configuré pour être logé dans l'assemblage. La direction longitudinale selon laquelle le passage s'étend depuis l'entrée jusqu'à la sortie est parallèle à une direction principale selon laquelle l'assemblage s'étend.
- selon un exemple, le passage s'étend depuis son entrée jusqu'à sa sortie selon une direction longitudinale. Le passage est sensiblement rectiligne. De préférence il ne comporte pas de coude. La direction d'écoulement du fluide caloporteur dans le passage est parallèle à la direction longitudinale du passage. La direction longitudinale du passage est parallèle à une direction principale selon lequel l'assemblage s'étend. Ainsi, l'écoulement du fluide caloporteur dans le passage et la direction longitudinale du canal sont parallèles à la direction privilégiée d'écoulement du fluide caloporteur le long de l'assemblage. Par conséquent, le sous-système de mesure du débit ne perturbe pas l'écoulement du fluide caloporteur à l'intérieur de l'assemblage et l'intérieur du coeur. Cela permet d'améliorer encore la précision de la mesure du débit,
- selon un exemple la direction d'écoulement du fluide caloporteur dans le passage est parallèle à la direction longitudinale du passage,
- selon un exemple, le fluide caloporteur n'est pas un métal liquide tel que le sodium. Selon un exemple, le fluide caloporteur est de l'eau ou à base d'eau.
- selon un exemple, le dispositif de mesure comprend un module de raccordement du module optique au corps, configuré pour établir une jonction étanche au fluide caloporteur entre le module optique et le passage, et transparente aux rayonnements lumineux incident et réfléchi. Ainsi, le module optique n'est pas en contact direct du fluide caloporteur dont on cherche à mesurer l'écoulement. Le sous-système de mesure du débit offre donc une précision satisfaisante dans l'environnement à conditions sévères du coeur d'un réacteur nucléaire,
- selon un exemple, le module optique comprend une portion de transmission du rayonnement lumineux incident disposée, selon la direction sensiblement perpendiculaire à l'axe de rotation du rotor, à une distance inférieure à 1 cm, de préférence à 5 mm, de préférence à 2 mm, du diamètre externe du rotor. Le module optique permet ainsi une mesure au plus près des pales du rotor. La précision de la mesure du débit est donc maintenue dans l'éventualité où le fluide caloporteur comprend des inhomogénéités,
- selon un exemple, le module optique est configuré pour être séparé du rotor au moins par le fluide caloporteur. Selon un exemple, la portion de transmission du rayonnement lumineux incident est disposée, selon la direction sensiblement perpendiculaire à l'axe de rotation du rotor, à une distance non nulle du diamètre externe du rotor,
- selon un exemple, le module optique comprend une fibre optique. Selon un exemple, la fibre optique présente, entre la portion de transmission et au moins un parmi le module d'émission et le module de réception, une longueur supérieure à 1 m, voire 50 m,
- selon un exemple, le module optique comprend une fibre optique à détection de proximité,
- selon un exemple, le module optique est configuré pour transmettre le rayonnement lumineux réfléchi au module de conversion, par exemple par le biais d'un module de réception,
- selon un exemple, le corps présente une paroi externe configurée pour être au contact du fluide caloporteur,
- selon un exemple, le rotor comprend en outre une pluralité de pales, au moins une pale présentant un coefficient de réflexion du rayonnement lumineux différent, par exemple inférieur, au coefficient de réflexion du rayonnement lumineux d'au moins une autre pale. Les pales du rotor présentant des coefficients de réflexion différents, le rayon lumineux présente une réflexion plus ou moins importante en fonction des pales. Le rayonnement lumineux réfléchi est donc modulé en fonction des pales sur lesquelles il se réfléchit, ce qui facilite et fiabilise la détermination du nombre de tour/unité de temps du rotor. La précision de la mesure du débit peut donc ainsi être encore améliorée. Cette solution se démarque clairement des solutions mettant en oeuvre des surfaces de réflexion sur chaque pale d'un rotor,
- selon un exemple, l'ensemble de l'au moins une pale est faite d'un matériau distinct d'un matériau constitutif de l'ensemble de l'au moins une autre pale, qui présente un coefficient de réflexion du rayonnement lumineux différent, par exemple inférieur, au matériau constitutif de l'au moins une autre pale,
- selon un exemple alternatif, au moins une pale est revêtue d'un revêtement différent d'un revêtement et/ou d'un matériau de l'au moins une autre pale, de façon à présenter un coefficient de réflexion du rayonnement lumineux différent, par exemple inférieur au matériau constitutif de l'au moins une autre pale,
- selon un exemple, le rotor comprend une unique pale présentant un coefficient de réflexion du rayonnement lumineux différent, par exemple inférieur, à au moins une autre pale,
- selon un exemple, le rotor comprend une unique pale présentant un coefficient de réflexion du rayonnement lumineux supérieur à au moins une autre pale,
- selon un exemple, le rotor comprend une pluralité de pales, au moins une pale étant faite d'un matériau présentant un coefficient de réflexion du rayonnement lumineux inférieur à celui d'un matériau constitutif des autres pales,
- selon un exemple, le rotor comprend au moins quatre pales, au moins deux pales étant en matière plastique et au moins deux pales étant en métal, de préférence lesdites au moins deux pales en métal sont en acier inoxydable,
- selon un exemple, chaque pale est uniquement faite d'un matériau. Ainsi la fabrication du rotor et donc du système est simplifiée. La différence de réflexion entre les pales se produit sur toute la surface des pales sur laquelle le rayonnement est réfléchi, améliorant encore la précision de la mesure du débit,
- selon un exemple, les pales du rotor présentent alternativement des coefficients de réflexion distincts. La modulation du rayonnement lumineux réfléchi se produit ainsi en fonction des pales successives sur lesquelles le rayonnement lumineux se réfléchit,
- selon un exemple, le module d'émission comprend une source laser. Selon cet exemple, le module de conversion peut comprendre un interféromètre laser,
- selon un exemple, le module optique comprend une fibre optique comprenant un réseau de Bragg,
- selon un exemple, le système comprend en outre au moins un capteur de pression configuré pour mesurer un paramètre relatif à une pression du fluide caloporteur s'écoulant dans le corps, ce paramètre étant par exemple la pression du fluide, de préférence l'au moins un capteur de pression est porté par le sous-système de mesure du débit du fluide caloporteur. Cela permet de collecter plus de données sur le fluide caloporteur tout en conservant un encombrement limité et en simplifiant la pose et la maintenance du système.

Notons que le procédé de mesure peut présenter toute étape résultant de la mise en oeuvre d'une caractéristique du système de détermination de la puissance générée.

Dans la présente demande de brevet, lorsque l'on indique que deux pièces sont distinctes, cela signifie que ces pièces sont séparées. Elles sont :
- positionnées à distances l'une de l'autre, et/ou
- mobiles l'une par rapport à l'autre et/ou
- solidaires l'une de l'autre en étant fixées par des éléments rapportés, cette fixation étant démontable ou non.

Une pièce unitaire monobloc ne peut donc pas être constituée de deux pièces distinctes.

Dans la description détaillée qui suit, il pourra être fait usage de termes tels que « longitudinal », « transversal », « supérieur », « inférieur », « haut », « bas », « avant », « arrière », « intérieur », « extérieur ». Ces termes doivent être interprétés de façon relative en relation avec la position normale de l'équipement et/ou du système. Par exemple, la direction « longitudinale » correspond à la direction d'extension principale du module actionneur du sous-système de mesure du débit.

On utilisera également un repère dont la direction longitudinale ou avant/arrière correspond à l'axe x, la direction transversale ou droite/gauche correspond à l'axe y et la direction bas/haut correspond à l'axe z.

« Interne » désigne les éléments ou les faces tournées vers l'intérieur de l'équipement et/ou du sous-système de mesure du débit, et « externe » désigne les éléments ou les faces tournées vers l'extérieur de l'équipement et/ou du sous-système de mesure du débit.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Dans la présente demande de brevet, on considère que le fluide est liquide lorsque le fluide est au moins en partie, voire totalement, à l'état liquide. On n'exclut donc pas que le fluide soit en partie à l'état gazeux, ni que le fluide comprenne une fraction solide.

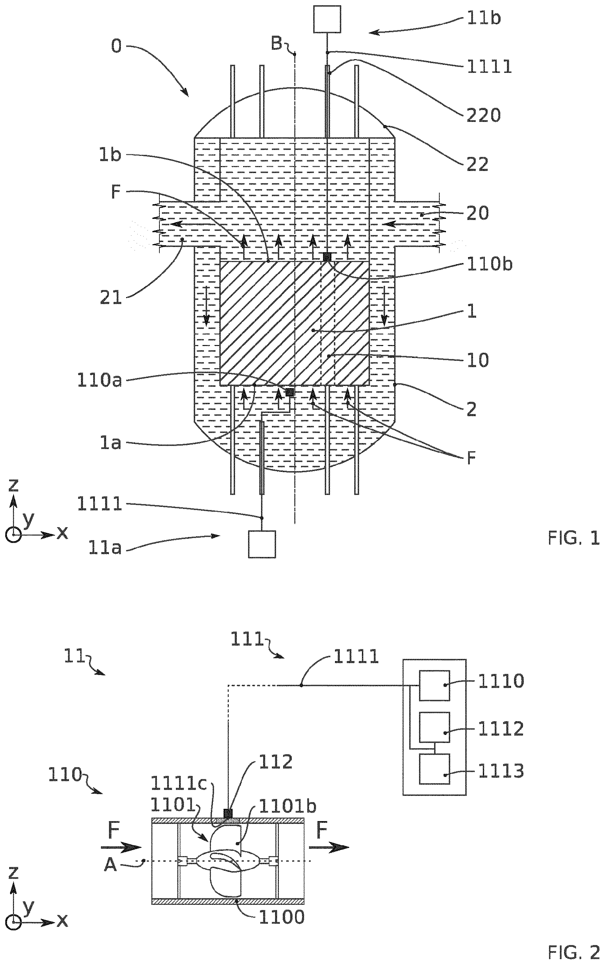

Le système de détermination de la puissance générée par un assemblage 10 pour réacteur nucléaire et le réacteur nucléaire 0 associé, sont maintenant décrits en référence à la figure 1. Le réacteur 0 comprend une cuve 2 dans laquelle le coeur 1 est disposé. Le combustible nucléaire se présente sous la forme d'assemblages 10. Pour des raisons de clarté, seul un assemblage 10 est illustré en figure 1. Un assemblage peut comprendre un faisceau de crayons. Ces crayons sont typiquement liés par une structure rigide, par exemple constituée de tubes et de grilles. Les assemblages 10 sont disposés les uns à côté des autres dans la cuve 2 du réacteur 0. À titre d'exemple, on compte sensiblement 205 assemblages 10 dans le coeur 1 pour un réacteur 0 d'une puissance de 1450 MWe. Il existe différents types d'assemblages 10 dans le coeur selon la fonction principale qu'ils sont destinés à remplir. Le système de détermination de la puissance générée qui va être décrit en détail ci-dessous est de préférence porté par un assemblage combustible. Néanmoins, ce système de détermination de la puissance générée peut également être porté par d'autres types d'assemblages, par exemple pris parmi les assemblages suivants:
- assemblages de protection neutronique latérale,
- guides de neutrons,
- réflecteurs,
- diluants.

Lors du fonctionnement du réacteur 0, les assemblages 10 sont traversés par le fluide caloporteur du circuit primaire. Les assemblages 10 s'étendent selon une direction principale. Le plus souvent sa direction principale est verticale. Le fluide caloporteur s'écoule autour et au travers de l'assemblage selon sa direction principale. Les assemblages 10 sont typiquement traversés de bas en haut par le fluide, par exemple de l'extrémité inférieure 1a du coeur 1 à son extrémité supérieure 1b comme illustré par les flèches F en figure 1. Dans le cas d'assemblages portant le matériau combustible, le fluide caloporteur s'échauffe à leur contact et emporte l'énergie thermique générée par fission. Pour acheminer le fluide caloporteur du circuit primaire au coeur 1, la cuve du réacteur comprend une entrée 20 de fluide, pouvant être désignée par le terme « branche froide ». En sortie du coeur 1, le fluide circule jusqu'à une sortie 21, pouvant être désignée par le terme « branche chaude ».

L'intérieur de la cuve 2 d'un réacteur, et plus particulièrement au niveau du coeur 1, constitue un environnement à conditions sévères, en termes de pression et de températures élevées, et de radiations. Selon un exemple, le fluide caloporteur circulant dans la cuve 2 du réacteur 0 est à une pression inférieure à 200 bar, voire à une pression comprise entre 50 et 200 bar, voire entre 100 et 200 bar. Le fluide caloporteur circulant dans la cuve 2 du réacteur 0 peut être à une température inférieure à 350 °C, voire entre 250 °C et 350 °C. Le fluide caloporteur peut s'écouler à un débit compris entre 0,05 et 25000 m³/h. Au niveau du coeur 1, le flux de neutrons thermiques peut être supérieur à 10¹⁴ n.cm⁻².s⁻¹.

Le fluide caloporteur est un liquide. Selon un exemple, le fluide caloporteur n'est pas un métal liquide tel que le sodium. Selon un exemple, le réacteur 0 est un réacteur nucléaire à eau légère (abrégé REL ou LWR de l'anglais *light water reactor*). Un REL est un réacteur nucléaire dont le fluide caloporteur du combustible est de l'eau, aussi appelée eau légère en distinction avec de l'eau lourde. Les REL les plus courants sont les réacteurs à eau pressurisée (abrégé REP, ou PWR de l'anglais *pressurized water reactor*) et les réacteurs à eau bouillante (abrégé REB, ou BWR de l'anglais *boiling water reactor*). Dans la suite on se réfère à l'exemple non limitatif dans lequel le réacteur 0 est un REL. Dans un REP, l'eau est typiquement à une pression sensiblement de 155 bar et à une température sensiblement de 320 °C. À titre d'exemple de REP, on peut citer le réacteur Jules Horowitz qui sera équipé d'un dispositif REP dans son coeur réacteur piscine. Dans un REB, l'eau est typiquement à une pression sensiblement de 80 bar et à une température sensiblement de 280 °C.

On cherche à déterminer la puissance générée par un assemblage 10. Pour cela, on cherche à mesurer une température du fluide caloporteur en entrée de l'assemblage 10, une température du fluide caloporteur en sortie de l'assemblage 10, et le débit du fluide caloporteur dans la cuve 2 du réacteur 0. Notamment, un objectif peut être de déterminer 37 la puissance thermique globalement fournie par le réacteur. Pour cela, le coeur 1 comprend un ensemble d'assemblages 10, dans lequel au moins un assemblage 10 comprend un système de détermination de la puissance générée.

Le système de détermination de la puissance générée comprend un sous-système de mesure d'une température en entrée de l'assemblage 10 et d'une température en sortie de l'assemblage 10. Comme détaillé ultérieurement, selon un exemple, le sous-système de mesure de température peut comprendre des capteurs de température additionnels au sous-système de mesure 11 du débit du fluide caloporteur. Selon un autre exemple, le sous-système de mesure 11 du débit peut être confondu avec le sous-système de mesure de température. Un sous-système de mesure 11 du débit peut alors être placé en entrée de l'assemblage 10. Un deuxième sous-système de mesure 11 du débit peut alors être placé en sortie de l'assemblage 10.

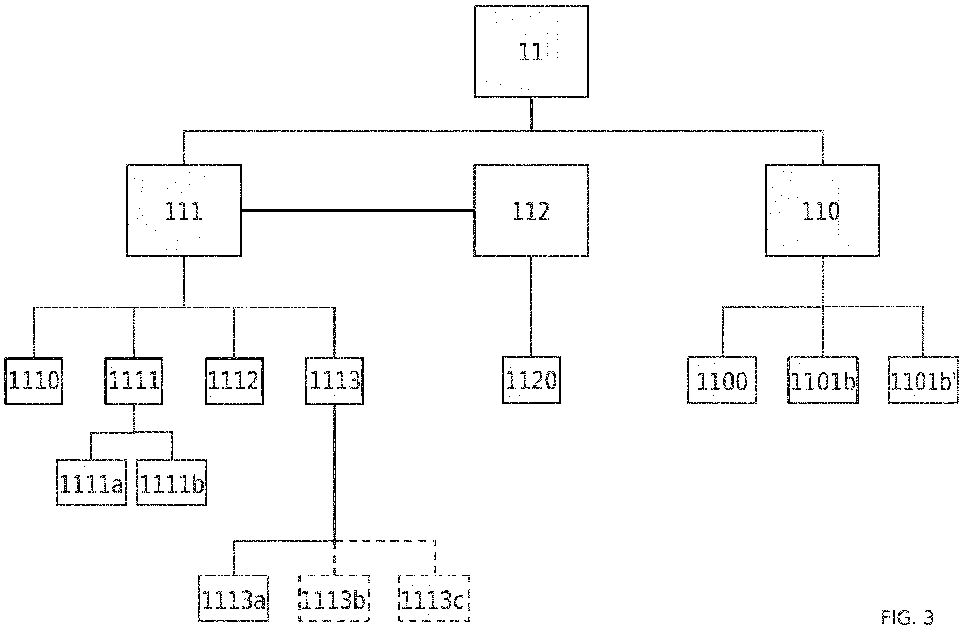

Le système de détermination de la puissance générée comprend un sous-système 11 de mesure du débit du fluide caloporteur. Comme illustré dans la figure 2 et dans le schéma fonctionnel en figure 3, le sous-système 11 comprend un module actionneur 110, configuré pour être entrainé par l'écoulement du fluide, représenté par les flèches F dans les figures 1 et 2. Le module actionneur 110 comprend un corps 1100 dans lequel le fluide s'écoule, par exemple selon la direction longitudinale x. Le module actionneur 110 comprend en outre au moins un rotor 1101 disposé à l'intérieur du corps 1100. Le rotor 1101 est configuré pour être entrainé en rotation autour de l'axe A. L'axe de rotation A est sensiblement parallèle à la direction d'écoulement x dans le corps 1100.

Le sous-système 11 comprend en outre un dispositif de mesure 111 de la vitesse de rotation du rotor 1101. Le dispositif de mesure 111 est configuré pour déterminer optiquement la vitesse de rotation du rotor 1101. Pour cela, et comme illustré dans le schéma fonctionnel en figure 3, le dispositif de mesure 111 peut comprendre un module d'émission 1110 d'un rayonnement lumineux, un module optique 1111, un module de réception 1112 du rayonnement lumineux et un module de conversion 1113.

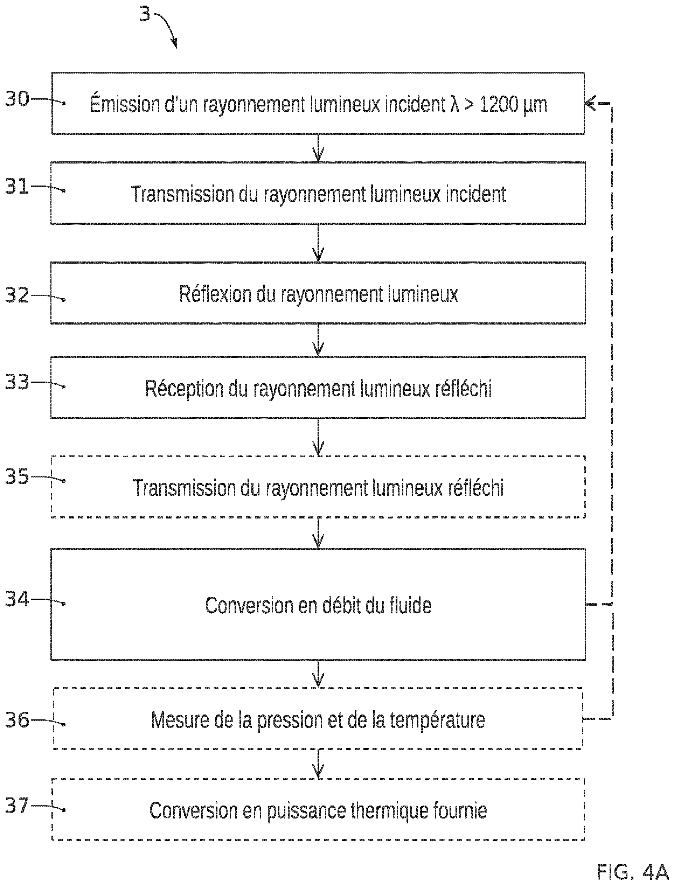

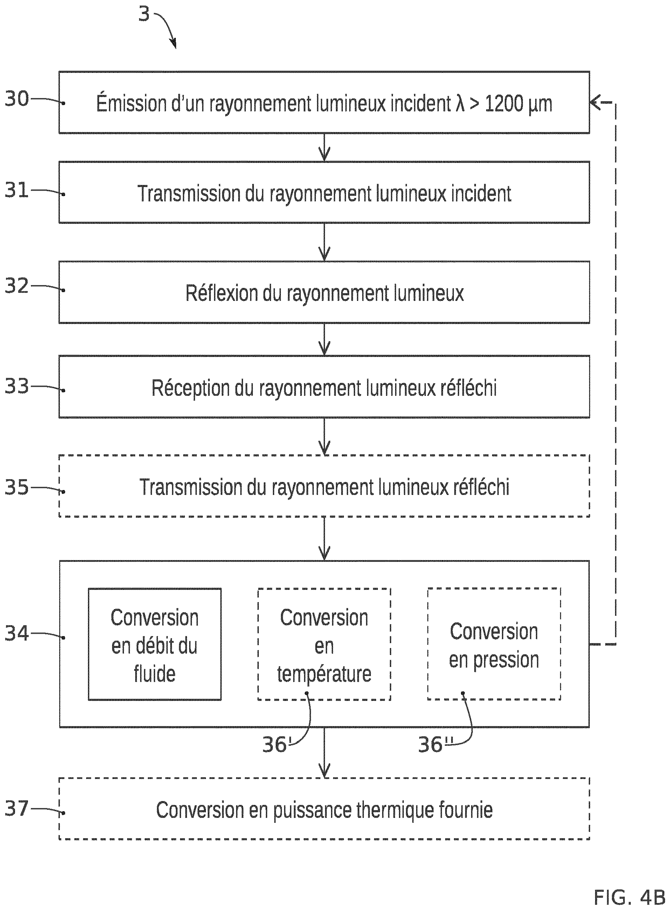

La cinématique de fonctionnement du système de détermination d'une puissance générée et le procédé 3 de mesure de la puissance générée sont maintenant décrits relativement aux figures 2, 4A et 4B. Dans les figures 4A et 4B, des étapes optionnelles sont indiquées en pointillées. Le module d'émission 1110 émet 30 un rayonnement lumineux dit incident. Le rayonnement présente une longueur d'onde supérieure à 1200 nm. Le rayonnement présente plus particulièrement une longueur d'onde supérieure à 1200 nm lors de sa propagation dans le fluide. Selon un exemple, le rayonnement présente une longueur d'onde inférieure à 1300 nm. Le rayonnement présente plus particulièrement une longueur d'onde inférieure à 1300 nm lors de sa propagation dans le fluide. Cette gamme de longueur d'onde permet la propagation du rayonnement lumineux dans le fluide caloporteur dans les conditions d'irradiations dans la cuve du réacteur 0, et plus particulièrement au niveau des assemblages 10. L'atténuation du signal due aux radiations est minimisée, et de préférence évitée. Une mesure optique précise et fiable du débit du fluide caloporteur est par conséquent permise par le sous-système 11.

Le module optique 1111 est configuré pour transmettre 31 le rayonnement lumineux incident depuis le module d'émission 1110 jusqu'au module actionneur 110, et plus particulièrement jusqu'au rotor 1101 entrainé en rotation par le fluide. Au niveau du rotor 1101, le rayonnement lumineux incident se réfléchit 32 sur les pales 1101b du rotor 1101. Le module optique 1111 est configuré pour recevoir le rayonnement lumineux réfléchi. Le module optique 1111 peut ensuite transmettre 35 le rayonnement lumineux réfléchi au premier module de conversion 1113. Cette transmission 35 peut être effectuée par le biais du module de réception 1112, configuré pour transformer le rayonnement lumineux réfléchi en un signal physique correspondant, par exemple un signal électrique. Le premier module de conversion 1113 peut comprendre le module de réception 1112.

Le rayonnement lumineux réfléchi est modulé en fonction de la rotation des pales 1101b autour de l'axe A. Par exemple, l'intensité du rayonnement lumineux réfléchi est modulée par la rotation des pales 1101b. Le premier module de conversion 1113 est configuré pour convertir le rayonnement réfléchi, ou le signal physique correspondant, en nombre de rotations du rotor 1101 par unité de temps, ce qui correspond à la vitesse de rotation du rotor 1101. En fonction de la vitesse de rotation du rotor 1101, le premier module de conversion 1113 est configuré pour déterminer le débit du fluide. Le premier module de conversion 1113 permet ainsi de convertir 34 le rayonnement réfléchi en débit du fluide caloporteur.

Le procédé 3 comprend en outre une mesure 36 de la température, et de préférence de la pression et de la température. Notons que cette mesure 36 peut être effectuée par des capteurs additionnels, à tout moment du procédé 3 et indépendamment de la mesure optique. Cette mesure 36 peut en alternative ou en complément être effectuée en fonction du rayonnement lumineux réfléchi. Ces deux exemples seront décrits plus en détail ultérieurement.

A partir du débit, de la température et de la pression du fluide caloporteur déterminés auparavant, un deuxième module de conversion peut être configuré pour déterminer 37 la puissance thermique générée par l'assemblage, voire fournie par le réacteur 0. Ainsi, le système de détermination de la puissance générée permet une mesure précise, en ligne et en temps réel de cette puissance thermique. Le premier module de conversion 1113 et le deuxième module de conversion peuvent être confondus. Dans la suite, on désigne indifféremment par « module de conversion 1113 » l'un ou l'autre de ces modules.

Le procédé de mesure 3 peut en outre être répété, comme illustré dans les figures 4A et 4B, afin de suivre temporellement le débit du fluide, voire en outre la température et de la pression du fluide.

En outre, le module optique 1111 est configuré de sorte que le rayonnement lumineux incident est incident sur les pales 1101b du rotor 1101 selon une direction z sensiblement perpendiculaire à l'axe A de rotation du rotor 1101. Le module optique 1111 peut comprendre une portion de transmission 1111c du rayonnement lumineux incident, configurée pour transmettre le rayonnement lumineux incident du module optique 1111au module actionneur 110. La portion de transmission 1111c peut permettre le passage du rayonnement incident et du rayonnement réfléchie au module optique 1111. La portion de transmission 1111c peut s'étendre selon la direction z sensiblement perpendiculaire à l'axe A de rotation du rotor 1101. L'encombrement du module optique 1111 est minimisé dans la direction x. Ainsi, les pertes de charge dans l'écoulement du fluide sont minimisées. Le sous-système 11 de mesure du débit permet donc une mesure précise et fiable du débit du fluide, et notamment une précision inférieure à 1 % de la valeur à mesurer. Par précision, on entend notamment le pourcentage d'erreur de la valeur mesurée, par rapport à la valeur réelle.

Le débit du fluide peut par ailleurs varier localement selon la structure de l'assemblage 10 et sa disposition dans le coeur 1. Lors du fonctionnement du réacteur 0, des pertes de charge locales peuvent survenir. Ces pertes de charges peuvent entrainer des chutes ou des augmentations locales du débit du fluide, et occasionner des dommages dans le coeur 1. Afin de mesurer le débit localement en différents endroits du coeur 1 du réacteur 0, plusieurs assemblages 10 peuvent comprendre le sous-système 11, et de préférence le système de détermination de la puissance générée. Le débit du fluide peut être mesuré simultanément et précisément en différents endroits du coeur 1 pour évaluer son évolution spatiale, voire spatiale et temporelle. La température du fluide caloporteur en entrée d'un assemblage et la température en sortie d'un assemblage peuvent être mesurées simultanément et précisément en différents endroits du coeur 1 pour évaluer leur évolution spatiale, voire spatiale et temporelle. La puissance générée par plusieurs assemblages peut être mesurée en différents endroits du coeur 1 du réacteur 0. Le fonctionnement du réacteur 0 peut ensuite être adapté en fonction de ces mesures.

Selon un exemple, au moins un tiers, voire un quart, des assemblages 10 peuvent comprendre au moins le sous-système 11 de mesure du débit, et de préférence le système de détermination de la puissance. Une cartographie précise de la puissance générée peut ainsi être obtenue. Selon un exemple, ces assemblages peuvent être répartis de façon homogène dans le coeur 1. Selon un autre exemple, en assimilant la cuve 2 à un volume cylindrique, ce volume peut être divisé en plusieurs portions. Dans un plan (x, y), chacune de ces portions peut s'étendre de l'axe haut/bas du coeur 1 à la cuve 2. L'axe haut/bas du coeur 1 correspond à l'axe de révolution B du coeur 1, par exemple illustré en figure 1. Les assemblages 10 comprenant au moins le sous-système 11 de mesure du débit, et de préférence le système de détermination de la puissance peuvent être regroupés dans au moins une de ces portions. Par exemple, ces assemblages 10 peuvent être regroupés dans un tiers, voire un quart de ce volume. Le coeur 1 présentant une symétrie de révolution autour de l'axe B, il est possible d'extrapoler les mesures faites par au moins le sous-système 11 de mesure du débit, et de préférence le système de détermination de la puissance, dans un tiers, voire un quart, de ce volume pour obtenir la cartographie du débit dans le coeur 1. Généralement, les assemblages 10 du coeur 1 sont en partie renouvelés à une fréquence régulière, typiquement de 12 à 18 mois. Lors de ce renouvellement, les sous-systèmes 11 de mesure du débit, et de préférence les systèmes de détermination de la puissance peuvent être transférés sur des assemblages non encore équipés du coeur 1, voire d'une autre portion du coeur 1.

La disposition relative des différents modules du sous-système 11 est maintenant décrite en référence aux figures 1 et 2. Le module actionneur 110 peut être disposé au niveau d'un assemblage 10, à une extrémité du coeur 1, par exemple sur une plaque de support d'un assemblage 10. Comme illustré en figure 1, le module actionneur 110a d'un sous-système 11a peut être disposé au niveau de l'extrémité inférieure 1a du coeur 1. Le module actionneur 110b d'un sous-système 11b peut être disposé au niveau de l'extrémité supérieure 1b du coeur 1.

Selon un exemple, le module actionneur 110 est monté sur l'assemblage 10 de façon amovible manuellement ou par l'intermédiaire d'outils. Ainsi, le module actionneur 110 peut être introduit et retiré au besoin de l'assemblage 10, par exemple pour son transfert sur un autre assemblage 10.

Selon un exemple, le module optique 1111 comprend un guide d'onde, et plus particulièrement une fibre optique 1111a. Comme illustré en figure 2, la fibre optique 1111a peut s'étendre entre la portion de transmission 1111c et le module d'émission 1110. La fibre optique 1111a peut s'étendre entre la portion de transmission 1111c et au moins l'un parmi le module de réception 1112 et le module de conversion 1113. La fibre optique 1111a permet de déporter le module d'émission 1110 et le module de conversion 1113 du rotor 1101 sur lequel la mesure est effectuée. Le sous-système 11 est donc adapté à la mesure du débit d'un fluide dans un environnement présentant une géométrie contrainte, comme c'est le cas dans le coeur 1 d'un réacteur 0. Le sous-système 11 est en outre adapté à la mesure du débit d'un fluide dans l'environnement à conditions sévères du coeur 1, en évitant un éventuel endommagement du module d'émission 1110, du module de réception 1112 et du module de conversion 1113. Selon l'exemple illustré en figure 1, la fibre optique 1111a s'étend entre la portion de transmission 1111c et au moins l'un parmi le module de réception 1112 et le module de conversion 1113 en passant par de la cuve 2, par exemple des conduits d'accès 220 du couvercle 22. La portion de transmission 1111c est de préférence disposée à l'extrémité distale de la fibre optique 1111a. La fibre optique1111a peut présenter une longueur supérieure à 1 m, voire 50 m, entre la portion de transmission et : le module d'émission 1110, et/ou le module de réception 1112, et/ou le module de conversion 1113.

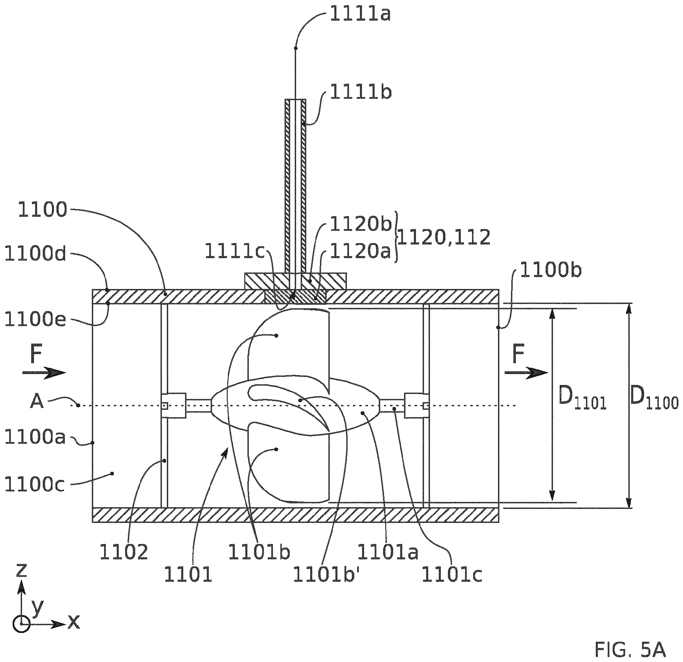

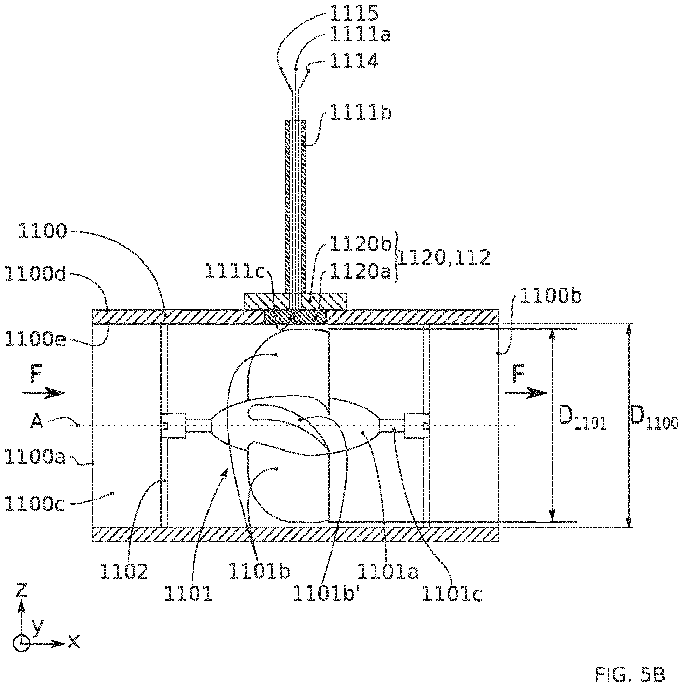

Comme illustré en figures 5A et 5B, la fibre optique 1111a peut être disposée à l'intérieur d'une gaine 1111b, également désignée câble creux reliant le module actionneur 110 au module d'émission 1110 et/ou au module de réception 1112 et/ou au module de conversion 1113, voire à un ensemble formé par ces trois modules. De préférence, la gaine 1111b est configurée pour éviter un pliage local de la fibre optique 1111a. Notons que les angles droits du module optique 1111 représentés dans la figure 1 constituent une représentation simplifiée et schématique du trajet du module optique 1111. La gaine 1111b peut être choisie pour être peu déformable dans le fluide en écoulement, notamment selon la température et la pression du fluide. De préférence, la gaine 1111b est étanche au fluide. Par exemple, la gaine 1111b est en métal, de préférence en acier inoxydable.

Le dispositif de mesure 111 peut en outre comprendre un module de raccordement 112 configuré pour assurer une jonction 1120 étanche entre le fluide et le module optique 1111. La jonction 1120 étanche permet d'éviter que le fluide pénètre dans le module optique 1111. Comme illustré en figures 5A et 5B, la jonction étanche 1120 peut comprendre une première partie 1120a, disposée entre le module optique 1111et le fluide s'écoulant dans le corps 1100 du module actionneur 110. Cette première partie 1120a peut notamment être disposée entre la portion de transmission 1111c du module optique 1111 et le rotor 1101, sur le trajet optique du rayonnement lumineux. Cette première partie 1120a est donc transparente au rayonnement lumineux utilisé. Par exemple, cette première partie est en en saphir. Selon un exemple, la première partie 1120a présente une épaisseur inférieure à 1 cm. La jonction étanche 1120 peut comprendre une deuxième partie 1120b. Cette deuxième partie 1120 peut être disposée entre le corps 1100 et la gaine 1111b de sorte que le fluide circulant à l'extérieur du corps 1100 ne pénètre pas dans le module optique 111. Par exemple, cette deuxième partie est en acier inoxydable.

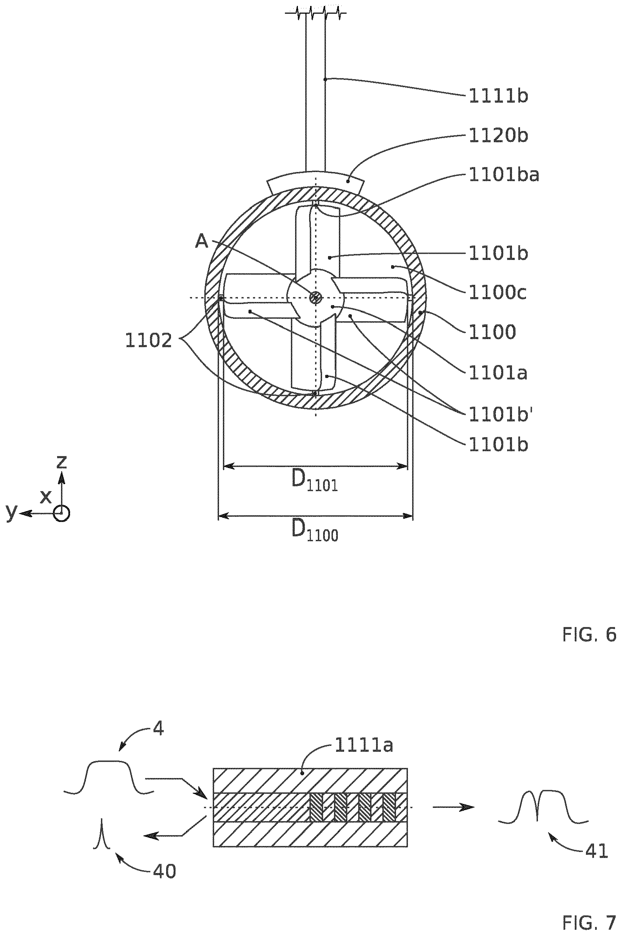

Le module actionneur 110 et sa coopération avec le module optique 1111 sont maintenant décrits plus en détail en référence aux figures 5A, 5B et 6. Le corps 1100 présente au moins une entrée 1100a et au moins une sortie 1100b. Il présente en outre au moins un passage 1100c pour l'écoulement du fluide depuis l'entrée 1100a jusqu'à la sortie 1100b. Le corps 1100 peut être disposé de sorte que le passage 1100c soit sensiblement parallèle à la direction d'écoulement x du fluide au niveau de l'assemblage 10, afin que la mesure du débit soit la plus fiable possible. Ainsi, de préférence la direction principale d'extension de l'assemblage 10 et la direction privilégiée d'écoulement x du fluide caloporteur le long de l'assemblage 10 sont parallèles à la direction principale d'extension du corps 1100 et à la direction d'écoulement du fluide à l'intérieur du passage 1000c. Cela permet de limiter les perturbations du fluide caloporteur et d'améliorer la précision de la mesure du débit.

Le corps 1100 peut présenter une paroi externe 1100d configurée pour être au contact du fluide en écoulement. Ainsi, le module actionneur 110 et donc le corps 1100 ainsi que le rotor 1101 sont plongés, de préférence entièrement immergés, à l'intérieur du réacteur 0.

Le corps 1100 présente en outre une ouverture de passage du module optique 1111. La portion de transmission 1111c du module optique 1111, et/ou la première partie 1120a de la jonction étanche 1120, peuvent être disposées dans cette ouverture de façon à affleurer la face interne 1100e du corps 1100. Ainsi, le module optique 1111 est disposé au plus proche du rotor 1101 sans pénétrer dans le passage 1100c du fluide. Un éventuel décalage ou une éventuelle déformation de la portion de transmission 1111c par rapport au rotor 1101 est évité. Le trajet optique du rayonnement lumineux n'est ainsi pas impacté par l'écoulement du fluide. En outre, le diamètre hydraulique interne du corps 1100 n'est ainsi pas modifié. Le profil de l'écoulement dans le corps 1100 n'est pas perturbé par le module optique 1111.

Le module actionneur 110 comprend au moins un rotor 1101, et de préférence un unique rotor 1101, monobloc. Ainsi, l'encombrement du rotor 1101 dans la direction x d'écoulement du fluide est minimisé, ce qui minimise encore les pertes de charge dans le fluide. Le rotor 1101 comprend un moyeu 1101a s'étendant selon l'axe de rotation A, sensiblement parallèle à la direction d'écoulement x du fluide. Le moyeu 1101a peut être monté sur un arbre 1101c. L'arbre 1101c peut être monté sur un support 1102 s'étendant au moins d'un point à un autre de la face interne 1100e du corps 1100. Dans un plan (y, z) de coupe du support 1102, le support 1102 occupe de préférence une fraction inférieure à 50 %, voire inférieure à 70 %, voire inférieure à 85 % de la surface du passage 1100c. Ainsi, le support minimise une perte de charge du fluide lors de son passage dans le module actionneur 110.

Le rotor 1101 comprend une pluralité de pales 1101b, 1101b' s'étendant radialement à l'axe de rotation A. La portion de transmission 1111c et/ou la première partie 1120a de la jonction étanche 1120, sont disposées selon la direction z perpendiculaire à l'axe A de rotation du rotor 1101, à une distance, de préférence non-nulle, inférieure à 1 cm, de préférence à 5 mm, de préférence à 1 mm, du diamètre externe du rotor 1101. Si le fluide caloporteur est inhomogène, le passage de particules solides entre la portion de transmission 1111c et l'extrémité 1101ba des pales 1101b, 1001b'est ainsi limité, comme par exemple illustré en figure 6. Le risque qu'une particule solide perturbe le passage du rayonnement lumineux est limité. Pour cela, le diamètre D₁₁₀₁ externe du rotor 1101, défini par la rotation des extrémités distales 1101ba des pales 1101b, 1101b', peut être déterminé par la relation suivante :
D₁₁₀₁ = D₁₁₀₀ - d, avec D₁₁₀₀ le diamètre interne du corps 1100 et d une distance, de préférence non-nulle, inférieure à 1 cm, de préférence à 5 mm, de préférence à 1 mm.

Notons que les caractéristiques du rotor 1101 peuvent en outre être choisies en fonction de la gamme de débit du fluide à mesurer. Ces caractéristiques peuvent par exemple être la dimension longitudinale du rotor 1101, et/ou le nombre de pales 1101b, 1101b'.

Selon un exemple, le rotor 1101 comprend des pales 1101b, 1101b', au moins une pale 1101b étant à base ou faite d'un matériau distinct de celui d'une ou des autres pales 1101b', ou recouverte d'un revêtement différent du revêtement ou du matériau d'une ou des autres pales 1101b'. Selon un exemple, au moins une pale est à base ou faite d'un matériau distinct d'un matériau constitutif des autres pales et présente un coefficient de réflexion du rayonnement lumineux différent, par exemple inférieur, à celui de la ou les autres pales.

Selon un exemple, l'ensemble de l'au moins une pale 1101b est faite d'un matériau distinct d'un matériau constitutif de l'ensemble de l'au moins une autre pale, qui présente un coefficient de réflexion du rayonnement lumineux différent, par exemple inférieur, au matériau constitutif de l'au moins une autre pale. Selon un exemple alternatif, au moins une pale est revêtue d'un revêtement différent d'un revêtement et/ou d'un matériau de l'au moins une autre pale, de façon à présenter un coefficient de réflexion du rayonnement lumineux différent, par exemple inférieur, au coefficient de réflexion du rayonnement de l'au moins une autre pale.

Chaque pale peut plus particulièrement être faite uniquement d'un matériau. Ainsi la fabrication du rotor et donc du système est simplifiée. Selon un exemple, au moins une pale peut présenter un coefficient de réflexion du rayonnement lumineux différent, inférieur ou supérieur, à celui d'au moins une autre pale. Selon un exemple, au moins une pale peut être faite d'un matériau présentant un coefficient de réflexion du rayonnement lumineux inférieur à celui du matériau constitutif des autres pales. Le coefficient de réflexion peut être défini par le rapport de l'intensité du rayonnement lumineux réfléchi sur l'intensité du rayonnement lumineux incident. Ainsi, le rayon lumineux présente une réflexion plus ou moins importante en fonction des pales, par exemple en fonction du matériau constitutif des pales. Le rayonnement lumineux réfléchi est donc modulé en fonction des pales sur lesquelles il se réfléchit, ce qui facilite la détermination du nombre de tour/unité de temps du rotor. La précision de la mesure du débit du fluide caloporteur peut donc ainsi être encore améliorée.

Lorsque chaque pale 1101b, 1101b' est uniquement faite d'un matériau ou est entièrement revêtue par le revêtement, la différence de réflexion entre les pales 1101b se produit sur toute la surface des pales sur laquelle le rayonnement est réfléchi. La détermination du nombre de tour/unité de temps du rotor 1101 est encore plus facilitée, améliorant encore la précision de la mesure du débit. Les matériaux de coefficients de réflexion distincts peuvent être le métal, magnétique ou non, de préférence l'acier inoxydable et le plastique.

Selon un exemple, les pales 1101b, 1101b' du rotor 1101 présentent alternativement des coefficients de réflexion distincts, par exemples elles sont alternativement faites de matériaux présentant des coefficients de réflexion distincts. De façon équivalente, pour une pale 1101b présentant un coefficient de réflexion, la pale ou les pales 1101b' directement adjacentes présentent un coefficient de réflexion distinct. La modulation du rayonnement lumineux réfléchi se produit en fonction des pales 1101b, 1101b' successives sur lesquelles le rayonnement lumineux se réfléchit, ce qui facilite encore la détermination du nombre de tour/unité de temps du rotor. Par exemple, pour un rotor comprenant quatre pales, deux pales 1101b' opposées par rapport à l'axe de rotation du rotor peuvent présenter un premier coefficient de réflexion, par exemple en étant faites d'un premier matériau, et les deux autres pales 1101b opposées par rapport à l'axe de rotation du rotor peuvent présenter un deuxième coefficient de réflexion, par exemple en étant faites d'un deuxième matériau, le premier et le deuxième matériau présentant des coefficients de réflexion distincts.

Selon un exemple, le rotor 1101 comprend au moins deux pales 1101b' en matière plastique et au moins deux pales 1101b en métal, magnétique ou non, et de préférence en acier inoxydable. Ainsi, le rayon lumineux présente une réflexion maximale sur les pales métalliques, et une réflexion moindre sur les pales en matière plastiques. Le rayonnement lumineux réfléchi est donc modulé en fonction des pales sur lesquelles il se réfléchit, ce qui facilite la détermination du nombre de tour/unité de temps du rotor.

Des exemples de réalisation du dispositif de mesure 111 sont maintenant détaillés. Selon un exemple, le module d'émission 1110, le module optique 1111 et le module de réception 1112 peuvent être configurés pour détecter par proximité la rotation du rotor 1101. Dans la détection par proximité, le module d'émission 1110 et le module de réception 1112 sont adjacents. Le rayonnement lumineux est réfléchi par un réflecteur. Lorsque que les pales 1101b, 1101b' du rotor 1101 coupent le faisceau, le rayonnement réfléchi sur les pales 1101b, 1101b' permet de détecter la vitesse de rotation des pales 1101b, 1001b'. Pour cela, la fibre optique 1111a peut être une fibre optique de proximité.

Selon un exemple, le module d'émission 1110 comprend une source laser. Selon cet exemple, le module de conversion 1113 comprend un interféromètre laser. La source laser émet un rayonnement temporellement cohérent permettant la détection de la rotation du rotor 1101 par interférométrie. De façon connue dans le domaine, l'interférométrie est une mesure utilisant le phénomène d'interférence des ondes. Les franges d'interférence résultantes donnent des informations sur la longueur du chemin optique parcouru. Cette technique présente l'avantage d'être précise tout en limitant le coût du sous-système de mesure 11.

Selon un exemple alternatif, la fibre optique 1111a peut comprendre un réseau de Bragg. Ainsi, le dispositif de mesure 111 permet non seulement une mesure du débit du fluide caloporteur, mais en outre une mesure de sa température et/ou de sa pression. Ainsi, la puissance thermique du réacteur 0 peut être obtenue 37 à partir du rayonnement lumineux, sans nécessiter de mesure additionnelle. Le système permet d'obtenir la puissance thermique du réacteur 0 en minimisant son encombrement au niveau de l'assemblage 1. Il n'est en effet pas nécessaire d'ajouter des capteurs additionnels de pression et de température.

Le fonctionnement d'une fibre optique à réseau de Bragg est décrit à titre d'exemple par la figure 7. Le rayonnement réfléchi 4 en provenance des pales 1101b du rotor 1101 peut pénétrer dans la fibre optique 1111a par la portion de transmission 1111c. En fonction des paramètres du réseau de Bragg dans la fibre optique 1111a, au moins une longueur d'onde, dite longueur d'onde de Bragg 40, est réfléchie par le réseau et ressort de la fibre par la portion de transmission 1111c. Le signal lumineux en sortie du réseau de Bragg 41 est donc constitué du rayonnement réfléchi 4 auquel l'au moins une longueur d'onde de Bragg 40 a été soustraite. La température et la pression du fluide peuvent faire varier les paramètres du réseau de Bragg, par exemple par dilatation ou déformation, et donc le signal lumineux 41 obtenu. La dilatation ou déformation du réseau de Bragg s'entend ici de l'effet de la température et de la pression du fluide sur le réseau de Bragg, et non d'une déformation mécanique induite par la rotation du rotor. C'est notamment le cas lorsque le module optique 1111 est configuré pour être séparé du rotor 1101 au moins par le fluide. Comme illustré en pointillé dans la figure 3, le module de conversion 1113 peut comprendre un moyen de conversion du débit 1113a ainsi que des moyens de conversion de la température 1113b et de la pression 1113c. Comme illustré en figure 4B, le procédé de mesure du débit du fluide peut en outre comprendre une conversion du rayonnement réfléchi en température 36' et/ou en pression 36" du fluide.

Avec une fibre optique comprenant un réseau de Bragg, la largeur spectrale du rayonnement lumineux peut être sensiblement comprise entre quelque nm et plusieurs milliers de nm.

Comme illustré en figure 5B, notons qu'on peut prévoir que le dispositif de mesure 111 comprennent des capteurs de pression 1115 et/ou de température 1114, par exemple additionnels au module optique 1111. Ces capteurs peuvent être configurés pour mesurer la pression et/ou la température du fluide s'écoulant dans le module actionneur 110. Par exemple, ces capteurs peuvent être disposés avec la fibre optique 1111a dans la gaine 1111b. De manière alternative ou complémentaire, on peut prévoir que la température et/ou la pression du fluide caloporteur soi(en)t mesurée(s) par des capteurs distincts du sous-système 11 de mesure, par exemple disposés sur des perches neutroniques.

Le procédé de mesure du débit du fluide peut en outre comprendre un étalonnage du système de détermination de la puissance générée préalablement à son utilisation. Par exemple, cet étalonnage peut être effectué de façon spécifique aux conditions d'utilisations du système de mesure 11 dans le réacteur 0.

Au vu de la description qui précède, il apparaît clairement que l'invention propose un système de détermination de la puissance générée par un assemblage une précision améliorée par rapport aux solutions existantes, et notamment avec une précision comprise dans une gamme de ± 1 % par rapport à la valeur réelle

L'invention n'est pas limitée aux modes de réalisations précédemment décrits et s'étend à tous les modes de réalisation couverts par les revendications.

### LISTE DES REFERENCES NUMERIQUES

0 Réacteur nucléaire
1 Coeur du réacteur
1a Extrémité inférieure
1b Extrémité supérieure
10 Assemblage
11, 11a, 11b Sous-système de mesure du débit
110, 110a, 110b Module actionneur
1100 Corps
1100a Entrée
1100b Sortie
1100c Passage
1100d Paroi externe
1100e Paroi interne
1101 Rotor
1101a Moyeu
1101b Pale
1101ba Extrémité distale
1101b' Pale
1101cArbre
1102 Support
111 Dispositif de mesure
1110 Module d'émission
1111 Module optique
1111a Fibre optique
1111b Gaine
1111c Portion de transmission
1112 Module de réception
1113 Module de conversion
1113a Sous-module de conversion du débit
1113b Sous-module de conversion de la température
1113c Sous-module de conversion de la pression
1114 Capteur de température
1115 Capteur de pression
112 Module de raccordement
1120 Jonction étanche
1120a Première partie
1120b Deuxième partie
2 Cuve du réacteur
20 Branche froide
21 Branche chaude
22 Couvercle
220 Conduit d'accès
3 Procédé de mesure
30 Émission d'un rayonnement lumineux incident λ > 1200 nm
31 Transmission du rayonnement lumineux incident
32 Réflexion du rayonnement lumineux
33 Réception du rayonnement lumineux réfléchi
34 Conversion en débit de fluide
35 Transmission du rayonnement lumineux réfléchi
36 Mesure de la pression et de la température
36' Conversion en température
36" Conversion en pression
37 Conversion en puissance thermique fournie
4 Rayonnement réfléchi
40 Rayonnement de Bragg
41 Signal lumineux en sortie du réseau de Bragg

## Revendications

1. Système de détermination d'une puissance générée par un assemblage (10) pour réacteur nucléaire (0), destiné à être immergé dans un fluide caloporteur, comprenant :
• un sous-système (11) de mesure du débit du fluide caloporteur comprenant :
o un corps (1100) comprenant au moins une entrée (1100a), au moins une sortie (1100b) et au moins un passage (1100c) pour l'écoulement du fluide caloporteur depuis l'entrée (1100a) jusqu'à la sortie (1100b), le passage (1100c) s'étendant depuis l'entrée (1100a) jusqu'à la sortie (1100b) selon une direction longitudinale,
o au moins un rotor (1101) disposé à l'intérieur du passage (1100c), le rotor (1101) comprenant une pluralité de pales et étant configuré pour être entraîné, par l'écoulement du fluide caloporteur, en rotation autour d'un axe (A) sensiblement parallèle à une direction d'écoulement du fluide caloporteur dans le passage (1100c), la direction d'écoulement du fluide caloporteur dans le passage (1100c) étant parallèle à la direction longitudinale du passage (1100c),
o un dispositif de mesure (111) d'une vitesse de rotation du rotor (1101), ce dispositif de mesure (111) d'une vitesse de rotation du rotor (1101) comprenant:
• un module d'émission (1110) d'un rayonnement lumineux incident présentant une longueur d'onde supérieure à 1200 nm,
• un module optique (1111) configuré pour
o transmettre le rayonnement lumineux incident depuis le module d'émission (1110) sur les pales (1101b) du rotor (1101), de sorte que le rayonnement lumineux incident est incident sur les pales (1101b) du rotor (1101) selon une direction sensiblement perpendiculaire à l'axe (A) de rotation du rotor (1101), et
o recevoir un rayonnement lumineux réfléchi, le rayonnement lumineux réfléchi étant issu de la réflexion, sur les pales (1101b) du rotor (1101), du rayonnement lumineux incident,
• un premier module de conversion (1113) configuré pour
o déterminer la vitesse de rotation du rotor (1101) en fonction du rayonnement réfléchi et déterminer le débit du fluide caloporteur en fonction de la vitesse de rotation du rotor (1101), et le système comprenant:
• un sous-système de mesure d'une température du fluide caloporteur en entrée de l'assemblage et d'une température du fluide caloporteur en sortie de l'assemblage, et
• un deuxième module de conversion configuré pour déterminer une puissance générée par l'assemblage en fonction au moins du débit du fluide caloporteur et d'une différence entre la température du fluide caloporteur en entrée de l'assemblage et la température du fluide caloporteur en sortie de l'assemblage.

2. Système selon la revendication précédente, dans lequel le dispositif de mesure (111) comprend un module de raccordement (112) du module optique (1111) au corps (1100), configuré pour établir une jonction (1120) étanche au fluide caloporteur entre le module optique (1111) et le passage (1100c), et transparente aux rayonnements lumineux incident et réfléchi.

3. Système selon l'une quelconque des revendications précédentes, dans lequel le module optique (1111) comprend une portion de transmission (1111c) du rayonnement lumineux incident disposée, selon la direction sensiblement perpendiculaire à l'axe (A) de rotation du rotor (1101), à une distance inférieure à 1 cm du diamètre externe du rotor (1101) et de préférence à 5 mm du diamètre externe du rotor (1101).

4. Système selon l'une quelconque des revendications précédentes, dans lequel le module optique (1111) comprend une fibre optique (1111a).

5. Système selon l'une quelconque des revendications précédentes, dans lequel au moins une pale (1101b') présente un coefficient de réflexion du rayonnement lumineux différent du coefficient de réflexion du rayonnement lumineux d'au moins une autre pale (1101b).

6. Système selon l'une quelconque des revendications précédentes, dans lequel le module optique (1111) comprend une fibre optique (1111a) comprenant un réseau de Bragg.

7. Système selon l'une quelconque des revendications 1 à 5, dans lequel le module d'émission (1110) comprend une source laser et le module de conversion (1113) comprend un interféromètre laser.

8. Système selon l'une quelconque des revendications précédentes, comprenant en outre au moins un capteur de pression configuré pour mesurer un paramètre relatif à une pression du fluide caloporteur s'écoulant dans le corps (1100), de préférence l'au moins un capteur de pression est porté par le sous-système (11) de mesure du débit du fluide caloporteur.

9. Réacteur (0) nucléaire comprenant :
• une cuve (2) dans laquelle circule un fluide caloporteur, et
• un ensemble d'assemblages (10) disposés dans la cuve, au moins un assemblage (10) de l'ensemble comprenant un système de détermination d'une puissance générée par un assemblage (10) selon l'une quelconque des revendications précédentes.

10. Réacteur (0) selon la revendication précédente, dans lequel au moins certains des assemblages (10) comprennent chacun ledit système de détermination d'une puissance générée par un assemblage (10).

11. Réacteur (0) selon l'une quelconque des deux revendications précédentes, le réacteur (0) étant un réacteur à eau légère.

12. Procédé (3) de détermination d'une puissance générée par un assemblage (10) pour réacteur (0) nucléaire par un système de détermination d'une puissance générée par un assemblage (10) selon l'une quelconque des revendications 1 à 8, comprenant au moins:
• une mesure d'un débit du fluide caloporteur comprenant au moins:
o une émission (30) par le module d'émission (1110), d'un rayonnement lumineux incident présentant une longueur d'onde supérieure à 1200 nm, puis
o une transmission (31), par le module optique (1111), du rayonnement lumineux incident depuis le module d'émission (1110) sur des pales du rotor, de sorte que le rayonnement lumineux incident est incident sur les pales (1101b) du rotor (1101) selon une direction sensiblement perpendiculaire à l'axe (A) de rotation du rotor (1101), puis
o une réflexion (32) du rayonnement lumineux incident sur les pales (1101b) du rotor (1101), puis
o une réception (33), par le module optique (1111), du rayonnement lumineux réfléchi, puis
o une conversion (34), par le module de conversion (1113), du rayonnement lumineux réfléchi de façon à déterminer la vitesse de rotation du rotor (1101), puis à déterminer le débit du fluide caloporteur en fonction de la vitesse de rotation du rotor (1101), et
• une mesure (36) d'une température du fluide caloporteur en entrée de l'assemblage et d'une température du fluide caloporteur en sortie de l'assemblage, et
• une conversion (37) en puissance générée par l'assemblage (10) à partir au moins du débit du fluide caloporteur, et d'une différence entre la température du fluide caloporteur en entrée de l'assemblage et la température du fluide caloporteur en sortie de l'assemblage.

13. Procédé (3) selon la revendication précédente, comprenant en outre une mesure (36) de la pression du fluide caloporteur.

14. Procédé (3) selon l'une quelconque des deux revendications précédentes, dans lequel la mesure (36) d'une parmi la température du fluide caloporteur en entrée de l'assemblage et la température du fluide caloporteur en sortie de l'assemblage est obtenue à partir du rayonnement lumineux réfléchi.

15. Procédé selon l'une quelconque des trois revendications précédentes, dans lequel, le réacteur nucléaire comprenant une cuve (2) dans laquelle circule le fluide caloporteur, le fluide caloporteur circulant dans la cuve (2) est à une pression inférieure à 200 bar, à une température inférieure à 350 °C et s'écoule à un débit compris entre 0,05 et 25000 m³/h.

## Patentansprüche

1. System zur Bestimmung einer Leistung, die von einem Brennelementbündel (10) für Kernreaktor (0) erzeugt wird, das dazu bestimmt ist, in einem Wärmeträger eingetaucht zu sein, umfassend:
• ein Teilsystem (11) zur Messung des Durchsatzes des Wärmeträgerses, umfassend:
∘ einen Körper (1100), der mindestens einen Eingang (1100a), mindestens einen Ausgang (1100b) und mindestens eine Passage (1100c) zum Strömen des Wärmeträgers ausgehend von dem Eingang (1100a) bis zu dem Ausgang (1100b) umfasst, wobei sich die Passage (1100c) von dem Eingang (1100a) bis zu dem Ausgang (1100b) gemäß einer Längsrichtung erstreckt,
o mindestens einen Rotor (1101), der in dem Inneren der Passage (1100c) angeordnet ist, wobei der Rotor (1101) eine Vielzahl von Blättern umfasst und dazu konfiguriert ist, von der Strömung des Wärmeträgers in Drehung um eine Achse (A) im Wesentlichen parallel zu einer Strömungsrichtung des Wärmeträgers in der Passage (1100c) angetrieben zu werden, wobei die Strömungsrichtung des Wärmeträgers in der Passage (1100c) zu der Längsrichtung der Passage (1100c) parallel ist,
o eine Messvorrichtung (111) einer Drehzahl des Rotors (1101), Messvorrichtung (111) einer Drehzahl des Rotors (1101), die Folgendes umfasst:
• ein Emissionsmodul (1110) einer einfallenden Lichtstrahlung, die eine Wellenlänge größer als 1200 nm aufweist,
• ein Optikmodul (1111), das dazu konfiguriert ist,
die einfallende Lichtstrahlung von dem Emissionsmodul (1110) auf die Blätter (1101b) des Rotors 1101) derart zu übertragen, dass die einfallende Lichtstrahlung auf die Blätter (1101b) des Rotors (1101) gemäß einer Richtung im Wesentlichen senkrecht zu der Rotationsachse (A) des Rotors (1101) einfällt, und
o eine reflektierte Lichtstrahlung zu empfangen, wobei die reflektierte Lichtstrahlung aus der Reflexion auf den Blättern (1101b) des Rotors (1101) der einfallenden Lichtstrahlung stammt,
• ein erstes Umwandlungsmodul (1113), das dazu konfiguriert ist, die Drehzahl des Rotors (1101) in Abhängigkeit von der reflektierten Strahlung zu bestimmen und den Durchsatz des Wärmeträgers in Abhängigkeit von der Drehzahl des Rotors (1101) zu bestimmen, und wobei das System Folgendes umfasst:
• ein Messteilsystem einer Temperatur des Wärmeträgers am Eingang des Brennelementbündels und einer Temperatur des Wärmeträgers am Ausgang des Brennelementbündels, und
• ein zweites Umwandlungsmodul, das dazu konfiguriert ist, eine Leistung zu bestimmen, die von dem Brennelementbündel in Abhängigkeit mindestens von dem Durchsatz des Wärmeträgers und einer Differenz zwischen der Temperatur des Wärmeträgers am Eingang des Brennelementbündels und der Temperatur des Wärmeträgers am Ausgang des Brennelementbündels erzeugt wird.

2. System nach dem vorstehenden Anspruch, wobei die Messvorrichtung (111) ein Anschlussmodul (112) des Optikmoduls (1111) an dem Körper (1100) umfasst, das dazu konfiguriert ist, eine gegenüber dem Wärmeträger dichte Verbindung (1120) zwischen dem Optikmodul (1111) und der Passage (1100c) herzustellen, und die für den einfallenden und den reflektierten Lichtstrahl durchlässig ist.

3. System nach einem der vorstehenden Ansprüche, wobei das Optikmodul (1111) einen Übertragungsabschnitt (1111c) der einfallenden Lichtstrahlung umfasst, der entlang der Richtung im Wesentlichen senkrecht zu der Rotationsachse (A) des Rotors (1101) in einem Abstand kleiner als 1 cm von dem Außendurchmesser des Rotors (1101) und bevorzugt 5 mm des Außendurchmessers des Rotors (1101) angeordnet ist.

4. System nach einem der vorstehenden Ansprüche, wobei das Optikmodul (1111) eine Lichtleitfaser (1111a) umfasst.

5. System nach einem der vorstehenden Ansprüche, wobei mindestens ein Blatt (1101b') einen Reflexionsfaktor der Lichtstrahlung aufweist, der von dem Reflexionsfaktor der Lichtstrahlung mindestens eines anderen Blatts (1101b) unterschiedlich ist.

6. System nach einem der vorstehenden Ansprüche, wobei das Optikmodul (1111) eine Lichtleitfaser (1111a) umfasst, die ein Bragg-Gitter umfasst.

7. System nach einem der Ansprüche 1 bis 5, wobei das Emissionsmodul (1110) eine Laserquelle umfasst, und das Umwandlungsmodul (1113) ein Laserinterferometer umfasst.

8. System nach einem der vorstehenden Ansprüche, das außerdem mindestens einen Drucksensor umfasst, der dazu konfiguriert ist, einen Parameter in Bezug auf einen Druck des Wärmeträgers, der in dem Körper (1100) strömt, zu messen, wobei bevorzugt der mindestens eine Drucksensor von dem Messteilsystem (11) des Durchsatzes des Wärmeträgerses getragen wird.

9. Kernreaktor (0), umfassend:
• ein Druckgefäß (2), in dem ein Wärmeträger zirkuliert, und
• eine Einheit von Brennelementbündeln (10), die in dem Druckgefäß angeordnet ist, wobei mindestens ein Brennelementbündel (10) der Einheit ein System zur Bestimmung einer Leistung, die von einem Brennelementbündel (10) erzeugt wird, nach einem der vorstehenden Ansprüche umfasst.

10. Reaktor (0) nach dem vorstehenden Anspruch, wobei mindestens bestimmte der Brennelementbündel (10) jeweils das System zur Bestimmung einer Leistung, die von einem Brennelementbündel (10) erzeugt wird, umfassen.

11. Reaktor (0) nach einem der zwei vorstehenden Ansprüche, wobei der Reaktor (0) ein Leichtwasserreaktor ist.

12. Verfahren (3) zur Bestimmung einer Leistung, die von einem Brennelementbündel (10) für Kernreaktor (0) erzeugt wird, durch ein System zur Bestimmung einer Leistung, die von einem Brennelementbündel (10) nach einem der Ansprüche 1 bis 8 erzeugt wird, das mindestens Folgendes umfasst:
• eine Messung eines Durchsatzes des Wärmeträgerses, die mindestens Folgendes umfasst:
o eine Emission (30) durch das Emissionsmodul (1110) einer einfallenden Lichtstrahlung, die eine Wellenlänge größer als 1200 nm aufweist, dann
o eine Übertragung (31) durch das Optikmodul (1111) der einfallenden Lichtstrahlung von dem Emissionsmodul (1110) auf Blätter des Rotors derart, dass die einfallende Lichtstrahlung auf die Blätter (1101b) des Rotors (1101) gemäß einer Richtung im Wesentlichen senkrecht zu der Rotationsachse (A) des Rotors einfällt, dann
o eine Reflexion (32) der einfallenden Lichtstrahlung auf die Blätter (1101b) des Rotors (1101), dann
o einen Empfang (33) der reflektierten Lichtstrahlung durch das Optikmodul (1111), dann
o eine Umwandlung (34) durch das Umwandlungsmodul (1113) der reflektierten Lichtstrahlung derart, dass die Drehzahl des Rotors (1101) bestimmt wird, dann den Durchsatz des Wärmeträgers in Abhängigkeit von der Drehzahl des Rotors (1101) zu bestimmen, und
• eine Messung (36) einer Temperatur des Wärmeträgers am Eingang des Brennelementbündels und einer Temperatur des Wärmeträgers am Ausgang des Brennelementbündels, und
• eine Umwandlung (37) in von dem Brennelementbündel (10) erzeugte Leistung ausgehend von mindestens dem Durchsatz des Wärmeträgers und einer Differenz zwischen der Temperatur des Wärmeträgers am Eingang des Brennelementbündels und der Temperatur des Wärmeträgers am Ausgang des Brennelementbündels.

13. Verfahren (3) nach dem vorstehenden Anspruch, das außerdem eine Messung (36) des Drucks des Wärmeträgers umfasst.

14. Verfahren (3) nach einem der zwei vorstehenden Ansprüche, wobei die Messung (36) einer der Temperatur des Wärmeträgers am Eingang des Brennelementbündels und der Temperatur des Wärmeträgers am Ausgang des Brennelementbündels ausgehend von der reflektierten Lichtstrahlung erhalten wird.

15. Verfahren nach einem der drei vorstehenden Ansprüche, wobei der Kernreaktor ein Druckgefäß (2), in dem der Wärmeträger zirkuliert, umfasst, wobei der Wärmeträger, der in dem Druckgefäß (2) zirkuliert, einen Druck kleiner als 200 bar, eine Temperatur kleiner als 350 °C aufweist und mit einem Durchsatz zwischen 0,05 und 25000 m3/h strömt.

## Claims

1. System for determining a power generated by an assembly (10) for nuclear reactor (0), intended to be immersed in a heat-transfer fluid, comprising:
- a sub-system (11) for measuring the flow rate of the heat-transfer fluid comprising:
o a body (1100) comprising at least one inlet (1100a), at least one outlet (1100b) and at least one passage (1100c) for the flow of the heat-transfer fluid from the inlet (1100a) to the outlet (1100b), the passage (1100c) extending from the inlet (1100a) to the outlet (1100b) in a longitudinal direction,
o at least one rotor (1101) disposed inside the passage (1100c), the rotor (1101) comprising a plurality of blades and being configured to be rotated, by the flow of the heat-transfer fluid, about an axis (A) substantially parallel to a flow direction of the heat-transfer fluid in the passage (1100c), the flow direction of the heat-transfer fluid in the passage (1100c), being parallel to the longitudinal direction of the passage (1100c),
o a device (111) for measuring a rotation speed of the rotor (1101), device (111) for measuring a rotation speed of the rotor (1101) comprising:
- a module (1110) for emitting an incident light radiation having a wavelength greater than 1200 nm,
- an optical module (1111) configured to:
o transmit the incident light radiation from the emission module (1110) on the blades (1101b) of the rotor (1101), such that the incident light radiation is incident on the blades (1101b) of the rotor (1101) in a direction substantially perpendicular to the axis (A) of rotation of the rotor (1101), and
o receive a reflected light radiation, the reflected light radiation coming from the reflection on the blades (1101b) of the rotor (1101), of the incident light radiation,
- a first conversion module (1113) configured to:
o determine the rotation speed of the rotor (1101) according to the reflected radiation and determine the flow rate of the heat-transfer fluid according to the rotation speed of the rotor (1101),
the system comprising:
- a sub-system for measuring a temperature of the heat-transfer fluid at the inlet of the assembly and a temperature of the heat-transfer fluid at the outlet of the assembly, and
- a second conversion module configured to determine a power generated by the assembly according to at least one flow rate of the heat-transfer fluid and a difference between the temperature of the heat-transfer fluid at the inlet of the assembly and the temperature of the heat-transfer fluid at the outlet of the assembly.

2. System according to the preceding claim, wherein the measuring device (111) comprises a module (112) for connecting the optical module (1111) to the body (1100), configured to establish a junction (1120) sealed to the heat-transfer fluid between the optical module (1111) and the passage (1100c), and transparent to the incident and reflected light radiations.

3. System according to any one of the preceding claims, wherein the optical module (1111) comprises a portion (1111c) for transmitting the disposed incident light radiation, in the direction substantially perpendicular to the axis (A) of rotation of the rotor (1101), at a distance less than 1 cm from the external diameter of the rotor (1101) and preferably 5 mm from the external diameter of the rotor (1101).

4. System according to any one of the preceding claims, wherein the optical module (1111) comprises an optical fibre (1111a).

5. System according to any one of the preceding claims, wherein at least one blade (1101b') has a reflection coefficient of the light radiation different from the reflection coefficient of the light radiation of at least one other blade (1101b).

6. System according to any one of the preceding claims, wherein the optical module (1111) comprises an optical fibre (1111a) comprising a Bragg grating.

7. System according to any one of claims 1 to 5, wherein the emission module (1110) comprises a laser source and the conversion module (1113) comprises a laser interferometer.

8. System according to any one of the preceding claims, further comprising at least one pressure sensor configured to measure a parameter relating to a pressure of the heat-transfer fluid flowing into the body (1100), preferably the at least one pressure sensor is carried by the sub-system (11) for measuring the flow rate of the heat-transfer fluid.

9. Nuclear reactor (0) comprising:
- a tank (2) wherein a heat-transfer fluid circulates, and
- a set of assemblies (10) disposed in the tank, at least one assembly (10) of the set comprising a system for determining a power generated by an assembly (10) according to any one of the preceding claims.

10. Reactor (0) according to the preceding claim, wherein at least some of the assemblies (10) each comprise said system for determining a power generated by an assembly (10).

11. Reactor (0) according to any one of the two preceding claims, the reactor (0) being a light water reactor.

12. Method (3) for determining a power generated by an assembly (10) for nuclear reactor (0) by a system for determining a power generated by an assembly (10) according to any one of claims 1 to 8, comprising at least:
- one measurement of a flow rate of the heat-transfer fluid, comprising at least:
o one emission (30) by the emission module (1110), of an incident light radiation having a wavelength greater than 1200 nm, then
o one transmission (31), by the optical module (1111), of the incident light radiation from the emission module (1110) on blades of the rotor, such that the incident light radiation is incident on the blades (1101b) of the rotor (1101) in a direction substantially perpendicular to the axis (A) of rotation of the rotor (1101), then
o one reflection (32) of the incident light radiation on the blades (1101b) of the rotor (1101), then
o one reception (33), by the optical module (1111), of the reflected light radiation, then
o one conversion (34), by the conversion module (1113), of the reflected light radiation, so as to determine the rotation speed of the rotor (1101), then to determine the flow rate of the heat-transfer fluid according to the rotation speed of the rotor (1101), and
- a one measurement (36) of a temperature of the heat-transfer fluid at the inlet of the assembly and a temperature of the heat-transfer fluid at the outlet of the assembly, and
- a conversion (37) into power generated by the assembly (10) from at least one flow rate of the heat-transfer fluid, and a difference between the temperature of the heat-transfer fluid at the inlet of the assembly and the temperature of the heat-transfer fluid at the outlet of the assembly.

13. Method (3) according to the preceding claim, further comprising a measurement (36) of the pressure of the heat-transfer fluid.

14. Method (3) according to any one of the two preceding claims, wherein the measurement (36) of one from among the temperature of the heat-transfer fluid at the inlet of the assembly and the temperature of the heat-transfer fluid at the outlet of the assembly is obtained from the reflected light radiation.

15. Method according to any one of the three preceding claims, wherein, the nuclear reactor comprising a tank (2), wherein the heat-transfer fluid circulates, the heat-transfer fluid circulating in the tank (2) is at a pressure less than 200 bar, at a temperature less than 350°C and flows at a flow rate of between 0.05 and 25000 m³/h.
